# EUROPEAN PATENT APPLICATION

(11) **EP 2 887 303 A1**
(43) Date of publication of application: **24.06.2015**
(21) Application number: 14197079.8
(22) Date of filing: 10.12.2014
(51) Int. Cl.: G06Q 50/06

(54) **Energy management system and data synchronization device**

(30) Priority: 19.12.2013 KR 20130159522
(71) Applicant: LSIS Co., Ltd., Anyang-si, Gyeonggi-do 431-848 (KR)
(72) Inventor: Lee, Seung Ju, 431-848 Anyang-si, Gyeonggi-do (KR); Lee, Myung Hwan, 431-848 Anyang-si, Gyeonggi-do (KR); Yoon, Yeo Chang, 431-848 Anyang-si, Gyeonggi-do (KR); Kong, Shin Jo, 431-848 Anyang-si, Gyeonggi-do (KR); Park, Jong Ho, 431-848 Anyang-si, Gyeonggi-do (KR)
(74) Representative: Lang, Johannes

(57) **Abstract**

An energy management system is provided. The energy management system includes a single line diagram creation server creating single line diagram data and distributing created single line diagram data and single line diagram data information to any one of a workstation or a web server; a workstation obtaining the single line diagram data from the single line diagram creation server or a web server; and the web server performing communication between web servers in respective dispatching centers, and sharing and synchronizing the single line diagram data when the communication is performed.

## Description

### BACKGROUND

The present disclosure relates to an energy management system.

A power system is connected to an energy management system (EMS) through a communication network. A dispatcher operating the EMS may perform a command for checking and controlling data in real time on a management console screen. Also, when the alarm rings, it is possible to follow up the alarm.

The management console screen arranges and displays a plurality of facility symbols on a single line diagram. Thus, it is possible to check the state of each system and perform control through the single line diagram displayed on the management console screen.

For example, a wiring-automation single line diagram may include a line (cable or overhead wire), a utility pole, a transformer, a load, a switch, a branch point, and a protective device.

In the case of a distribution system, a facility is newly or additionally installed with the increase of a load, or when there is a change in operation condition such as supply capacity or voltage loss, single line diagrams distributed to a plurality of human machine interface (HMI) workstations in a dispatching center should also be updated frequently.

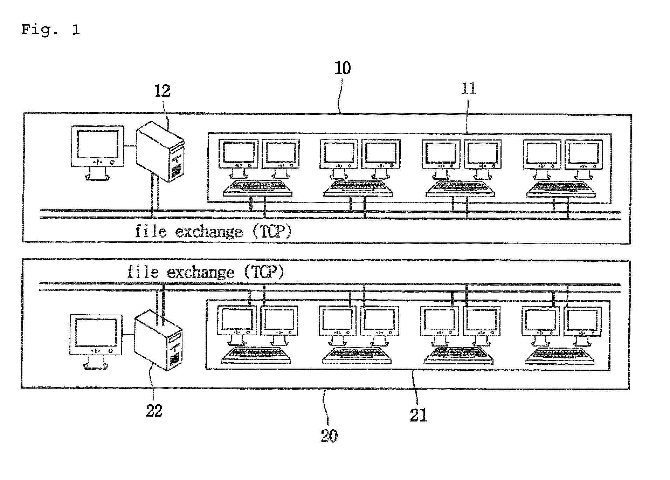

Fig. 1 depicts a typical energy management system (EMS).

Referring to Fig. 1, a single line diagram graphic file of the typical EMS is independently created in single line diagram creation servers 12 and 22 of a plurality of dispatching centers. A created graphic file is distributed to only workstations 11 and 21 connected through a closed network. In this case, a user's separate operation is needed to share single line diagram graphic files stored in the respective single line diagram creation servers 12 and 22 of the plurality of dispatching centers 10 and 20. That is, a sharing method is being used in which a user physically copies a single line diagram graphic file stored in any one of the single line diagram creation servers 12 and 22 and moves the file to a single line diagram creation server which wants sharing.

Thus, each dispatching center considering similar types of data and similar states may share data by only using a single line diagram graphic file not synchronized or a file movement by a separate operator.

### SUMMARY

Embodiments provide an energy management system (EMS) and a data synchronization device that enable a dispatching center to easily share and distribute various executable data files including a single line diagram graphic file.

In one embodiment, an energy management system includes a single line diagram creation server creating single line diagram data and distributing created single line diagram data and single line diagram data information to any one of a workstation or a web server; a workstation obtaining the single line diagram data from the single line diagram creation server or a web server; and the web server performing communication between web servers in respective dispatching centers, and sharing and synchronizing the single line diagram data when the communication is performed.

### BRIEF DESCRIPTION OF THE DRAWINGS

Fig. 1 depicts a typical energy management system (EMS).
Fig. 2 depicts an EMS to which an embodiment is applied.
FIG. 3 is a block diagram of a workstation according to an embodiment.
Fig. 4 is a flowchart of the communication operation of dispatching center web servers according to an embodiment.
FIG. 5 is a flowchart of a workstation according to an embodiment.

### DETAILED DESCRIPTION OF THE EMBODIMENTS

The terms or words used in the detailed description and claims should not be limitatively construed as typical meanings or meanings indicated in dictionaries but should be construed as meanings and concepts matching the technical spirit of the present invention based on the principle that the inventor may properly define the concepts of terms in order to describe his or her invention in the best mode.

Thus, since embodiments described in the detailed description and configurations shown in the drawings are only examples and do not cover all the technical spirits of an embodiment, it should be understood that there may be various equivalents and variations that may replace them upon filing the present application.

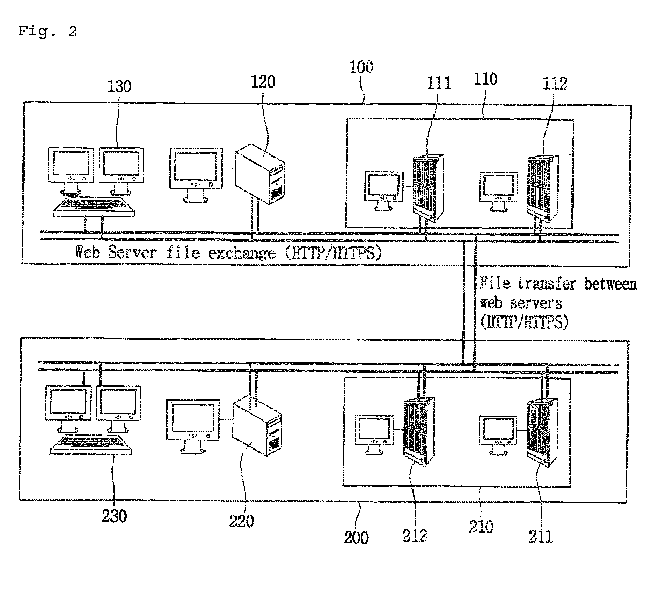

Fig. 2 depicts an energy management system (EMS) to which the present embodiment is applied.

Referring to Fig. 2, the EMS to which the present embodiment is applied may include a plurality of dispatching centers 100 and 200, which includes web servers 110 and 210, single line diagram creation servers 120 and 220 and a plurality of workstations 130 and 230, respectively.

The respective web servers 110 and 210 of the plurality of dispatching centers 100 and 200 perform file transmission and reception between the web servers 110 and 210. According to the present embodiment, it is possible to store, mutually transmit and receive single line diagram graphic files created at the single line diagram creation servers 120 and 220. The web servers 110 and 210 may sense request signals for updating single line diagrams from the workstations 130 and 230 and transmit pre-stored single line diagram graphic files to corresponding workstations. In particular, when receiving single line diagram graphic files from the single line diagram creation servers 120 and 220, the web servers 110 and 210 may together receive and store version information on corresponding single line diagram graphic files. Also, by using a distributed single line diagram graphic file, it is possible to store managed data and perform file synchronization with another dispatching center.

The web servers 110 and 210 according to an embodiment may be provided in plurality in each dispatching center. That is, the web server 110 in a first dispatching center 100 may be configured by a main web server 111 and a sub web server 112. Also, the web server 210 in a second dispatching center 200 may be configured by a main web server 211 and a sub web server 211 as well.

The main web servers 111 and 211 and the sub web servers 112 and 212 in the dispatching centers may perform mutual communication or cross communication, and operate with a redundancy communication line for the stabilization of communication. The main web servers 111 and 211 and the sub web servers 112 and 212 may check mutual communication states in real time or regularly and perform communication by preferentially using a web server having a good state depending on the communication state of each web server. That is, when the communication states of the main web servers are not good while the main web servers 111 and 211 are preferentially used as main web servers, it is possible to change the function of the sub web servers 112 and 212 so that they have the function of main web servers. Then, the sub web servers 112 and 212 may continue to check the communication state of main servers and when the communication state returns to the previous state, it is possible to return the function of main web servers.0020.

The single line diagram creation servers 120 and 220 may create and store single line diagram graphic files transmitted and received to and from the workstations 130 and 230 and the web servers 110 and 210. The single line diagram creation servers 120 and 220 may incorporate the version information into created single line diagram graphic files. The single line diagram creation servers 120 and 220 may transmit the single line diagram graphic files including the version information to the connected workstations and the connected web servers in dispatching centers.

The workstations 130 and 230 may be provided in plurality in the dispatching centers. The workstations may receive, store and output single line diagram graphic files from connected single line diagram creation servers 120 and 220. Also, when single line diagram graphic files are activated by an operator's request, the workstations 130 and 230 may directly receive and store single line diagram graphic files from the web servers 110 and 210 when there is no pre-stored single line diagram graphic file or when a requested graphic file is different in version from the single line diagram graphic file stored in the web servers.

The workstations 130 and 230 according to the present invention may perform communication with the single line diagram creation servers 120 and 220 and also perform direct communication with the web servers 110 and 210. When the workstations 130 and 230 perform communication with the web servers 110 and 210, they may perform limited communication with connected web servers in the dispatching centers.

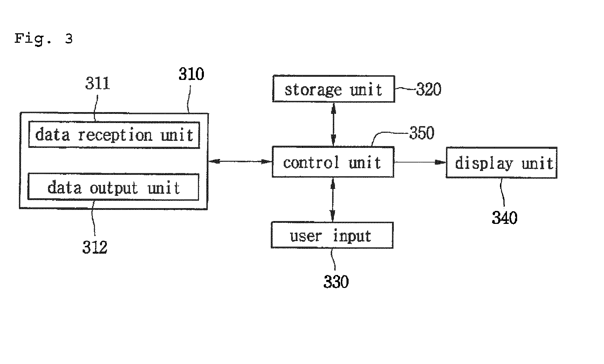

FIG. 3 is a block diagram of a workstation according to an embodiment.

Referring to Fig. 3, the workstation according to the present embodiment may be provided in plurality in a dispatching center. The workstation according to the present embodiment may include a communication unit 310, a storage unit 320, a user input unit 330, a display unit 340, and a control unit 350.

The communication unit 310 may include a data reception unit 311 and a data output unit 312. The data reception unit 311 may receive a single line diagram graphic file created from the single line diagram creation server. Also, the data reception unit 311 may receive from the web server a single line diagram graphic file distributed from another dispatching center.

The data output unit 312 may request the single line diagram creation server to transmit a single line diagram graphic file or request the web server having a preset URL to transmit a single line diagram graphic file.

The storage unit 320 may together store the single line diagram graphic file and transmission and reception history information transmitted and received through the communication unit 310. Also, the storage unit 320 may together store version information on the single line diagram graphic file. Also, it is possible to store information on a dispatching center and corresponding web server that has distributed the single line diagram graphic file.

The user input unit 330 may receive a single line diagram graphic file activation signal and a user control signal according to the present embodiment. The user input unit 330 may receive a user input signal that may request the web server to transmit a single line diagram graphic file based on whether there is a pre-stored single line diagram graphic file and on version information according to the present embodiment.

The display unit 340 may display information on an operation performed at the workstation and a single line diagram graphic file. Also, the display unit 340 may display version information on the single line diagram graphic file and information on a dispatching center (web server).

The control unit 350 may perform overall control on an operation performed at the workstation. The control unit 350 may check whether there is a single line diagram graphic file in the storage unit 320 and version information when an operation request signal from the workstation is sensed according to the present embodiment. The control unit 350 may display a result of checking whether there is the single line diagram graphic file and version information or request the web server to transmit it. Also, it is possible to receive from the web server a single line diagram graphic file received from another dispatching center and check and analyze a pre-stored single line diagram graphic file and corresponding data.

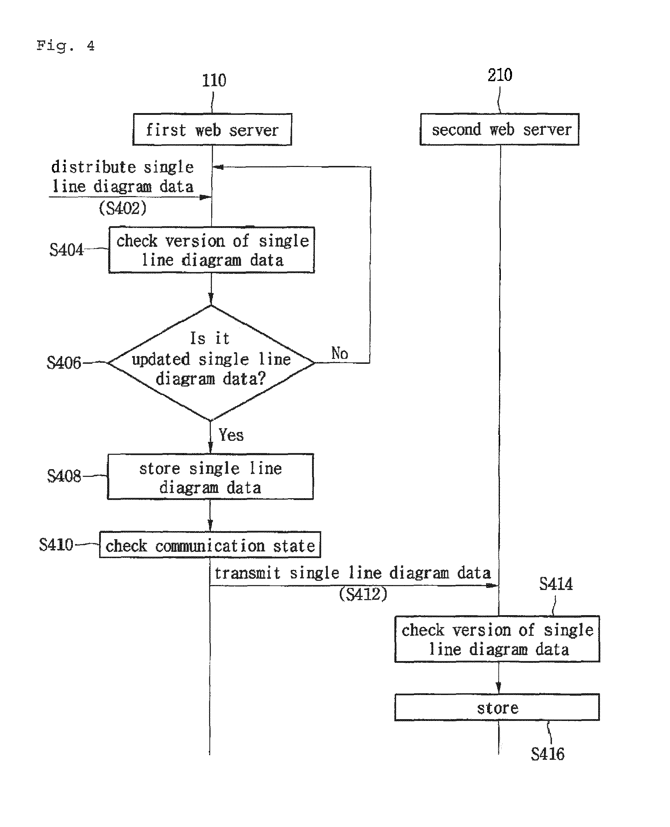

Fig. 4 is a flowchart of the communication operation of dispatching center web servers according to an embodiment.

Referring to Fig. 4, the dispatching centers 100 and 200 may include the first web server 110 and the second web server 210, respectively. The main server 111 of the first web server 110 may store a single line diagram graphic file (hereinafter, referred to as 'single line diagram data') created at the single line diagram creation server 120 in the first dispatching center 110 in step S402. The main server 111 may check version information on the single line diagram data received from the single line diagram creation server 120 in step S404.

The first web server 110 may determine based on checked version information whether pre-stored single line diagram data has a higher version than the single line diagram data received from the single line diagram creation server 120 in step S406.

The first web server 110 may update the pre-stored single line diagram data to the received single line diagram data when the received single line diagram data has a higher version than the pre-stored single line diagram data or is different therefrom in step S408.

The first web server 110 may check the communication state of the main web server 111 in order to transmit the stored single line diagram data to the second web server 210 of the second dispatching center 200. In this case, when the communication state of the web server 111 is not good, it is possible to perform communication by using the sub web server 112.

The main web server 111 of the first web server 110 may transmit updated single line diagram data to the main web server 211 of the second web server 210. Even in the case of the second web server 210, it is possible to change to the sub web server 212 depending on the communication state of the main web server 211 of the second web server 210 to perform communication.

The main web server 211 of the second web server 210 may receive single line diagram data distributed from the first web server 110 and check pre-stored single line diagram data, version information and synchronization information in step S414.

When receiving received single line diagram data different from the pre-stored single line diagram data or having a higher version than that, the main web server 211 of the second web server 210 may update and store the pre-stored single line diagram data to the received single line diagram data in step S416.

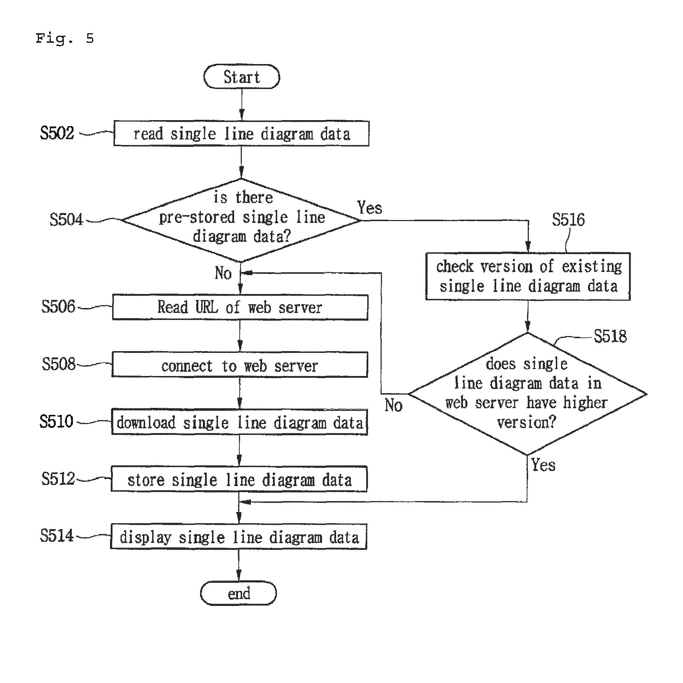

As described above, an operation of activating and outputting the single line diagram data stored in the web server is described in detail with reference to Fig. 5.

FIG. 5 is a flowchart of a workstation according to an embodiment.

Referring to Fig. 5, the control unit 350 of the workstation 130 according to the present embodiment may sense a read request signal for single line diagram data to read pre-stored single line diagram data in step S502.

The control unit 350 first determined whether the single line diagram data is stored in the storage unit 320 when reading pre-stored single line diagram data, in step S504.

The control unit 350 may read the URL of the web server 110 connected to a corresponding dispatching center 100 in step S506 when there is no single line diagram data in the storage unit 230, and connect to the web server 110 in step S508.

The control unit 350 may download single line diagram data stored in the web server 310 through the data reception unit 310 in step S510.

The control unit 350 may store downloaded single line diagram data in the storage unit in step S512.

When the storing of the downloaded single line diagram data is completed, the control unit 350 may read single line diagram data to display the data on the display unit 340 in step

S514.

On the contrary, when there is the pre-stored single line diagram data in the storage unit 320 according to a read request signal for single line diagram data, the control unit 350 may check the version of the pre-stored single line diagram data in step S516.

That is, the control unit 350 may check version information on the pre-stored single line diagram data and the single line diagram data stored in the web server 110 and, as a result, check whether the single line diagram data of the web server 100 has a higher version in step S518.

Thus, when the single line diagram data of the web server 110 has a higher version than the pre-stored single line diagram data, it is possible to update the single line diagram data of the storage unit 320 to the single line diagram data stored in the web server 110. The update operation of the single line diagram data may be similar to the download operation of the single line diagram data as described above. That is, the control unit 350 may read the URL of the web server in step S506, establish communication with a corresponding web server 110 in step S508, and download single line diagram data from the web server 110 in step S510 and store the downloaded data in step S512.

Also, although only the transmission and reception operations of the single line diagram data through the web server according to the present embodiment has been described, it is also possible to synchronize, extract and display single line diagram data between the first dispatching center and the second dispatching center at the web server or workstation.

Also, it is possible to maintain the stabilization of communication through the web server having a redundancy structure including the main web server and the sub web server depending on the communication state.

Embodiments are mainly described above. However, they are only examples and do not limit the present invention. A person skilled in the art may appreciate that many variations and applications not presented above may be implemented without departing from the essential characteristic of embodiments. For example, each component specifically represented in embodiments may vary. In addition, it should be construed that differences related to such a variation and such an application are included in the scope of the present invention defined in the following claims.

## Claims

1. An energy management system comprising:
a single line diagram creation server(120, 220) creating single line diagram data and distributing created single line diagram data and single line diagram data information to any one of a workstation(130, 230) or a web server(110, 210);
a workstation(130, 230) obtaining the single line diagram data from the single line diagram creation server(120, 220) or a web server(110, 210); and
the web server(11, 210) performing communication between web servers in respective dispatching centers(100, 200), and sharing and synchronizing the single line diagram data when the communication is performed.

2. The energy management system according to claim 1, wherein the workstation transmits an update request signal for the single line diagram data to the web server and downloads requested single line diagram data from the web server.

3. The energy management system according to claim 2, wherein the workstation(130, 230) checks a version of pre-stored single line diagram data and version information on single line diagram data stored in the web server(110, 210) and downloads new single line diagram data according to a checked result, when an activation request signal for the single line diagram data is sensed.

4. The energy management system according to claim 3, wherein the workstation(130, 230) downloads single line diagram data stored in the web server(110, 210) to update pre-stored single line diagram data, when as a result of checking the version information, the single line diagram data stored in the web server is of a higher version.

5. The energy management system according to claim 2, wherein the workstation(130, 230) checks whether there is pre-stored single line diagram data when the activation request signal for the single line diagram data is sensed, and accesses the web server(110, 210) to download single line diagram data when there is no pre-stored single line diagram data.

6. The energy management system according to claim 5, wherein the workstation(130, 230) accesses a corresponding web server based on pre-stored URL information on the web server when downloading the single line diagram data.

7. The energy management system according to claim 1, wherein the web server(110, 210) is provided in plurality and a plurality of web servers perform mutual or cross communication.

8. The energy management system according to claim 1, wherein the web server(110, 210) includes a redundancy communication line.

9. The energy management system according to claim 1, wherein the web server(110, 210) includes a main web server(111, 211) and a sub web server(112, 212) in each of dispatching centers(100, 200), and the main web server and the sub web server check a mutual communication state regularly or in real time.

10. The energy management system according to claim 9, wherein a web server(110, 210) having a normal communication state is defined as the main server when a communication state of any one of the main web server(111,211) and the sub web server(112,212) configuring the web server is not normal.

11. The energy management system according to claim 1, wherein the web server(110, 210) transmits single line diagram data received from a web server in another dispatching center(100, 200) to the workstation, and the workstation compares pre-stored single line diagram data with received single line diagram data to output a result of comparison.

12. The energy management system according to claim 1, wherein the workstation(130, 230) is provided in plurality in the dispatching center.

13. The energy management system according to claim 12, wherein the workstation comprises:
a communication unit(310) requesting the single line diagram creation server or the web server to transmit the single line diagram data and receiving corresponding single line diagram data;
a storage unit(320) storing received single line diagram data and information on the single line diagram data;
a display unit(340) displaying a workstation executable file based on the single line diagram data; and
a control unit checking single line diagram data stored in the storage unit, and requesting single line diagram data through the communication unit or enabling the single line diagram data to be transmitted to a preset destination.

14. The energy management system according to claim 13, wherein the storage unit stores the single line diagram data and version information on the single line diagram data, and
the control unit checks whether there is the single line diagram data and version information on new single line diagram data and updates pre-stored single line diagram data.

15. The energy management system according to claim 13, further comprising a user input unit(330) for receiving an activation request signal for the single line diagram data and a user control signal.
